# EUROPEAN PATENT APPLICATION

(11) **EP 2 830 350 A1**
(43) Date of publication of application: **28.01.2015**
(21) Application number: 13763696.5
(22) Date of filing: 22.03.2013
(51) Int. Cl.: H04W 24/10, H04W 28/16

(54) **WIRELESS COMMUNICATION SYSTEM, USER TERMINAL, WIRELESS BASE STATION DEVICE AND WIRELESS COMMUNICATION METHOD**

(30) Priority: 23.03.2012 JP 2012067845
(71) Applicant: NTT Docomo, Inc., Tokyo 100-6150 (JP)
(72) Inventor: NAGATA, Satoshi, Tokyo 100-6150 (JP); WANG, Jing, Beijing 100190 (CN); YUN, Xiang, Beijing 100190 (CN); CHEN, Lan, Beijing 100190 (CN)
(74) Representative: Hoffmann Eitle
(86) International application number: PCT/JP2013/058227
(87) International publication number: WO 2013/141338

(57) **Abstract**

The present invention is designed to suitably feed back each CoMP cell's channel state information when CoMP transmission is applied. In a radio communication system providing a plurality of radio base station apparatuses and a user terminal that is configured to be able to perform coordinated multiple-point transmission/reception with the plurality of radio base station apparatuses, the user terminal has an acquiring section that acquires channel state information of each of multiple cells, a generating section that generates feedback information such that at least part of the acquired channel state information of the multiple cells is combined and transmitted in the same subframe, and a transmission section that periodically feeds back the generated feedback information to a radio base station apparatus, which is one of multiple coordinated points, using a physical uplink control channel, and the radio base station apparatus has an updating section that updates the channel state information using the channel state information that is fed back from the user terminal.

## Description

### Technical Field

The present invention relates to a radio communication system, a user terminal, a radio base station apparatus and a radio communication method that are applicable to a cellular system and so on.

### Background Art

In a UMTS (Universal Mobile Telecommunications System) network, attempts are made to optimize features of the system, which are based on W-CDMA (Wideband Code Division Multiple Access), by adopting HSDPA (High Speed Downlink Packet Access) and HSUPA (High Speed Uplink Packet Access), for the purposes of improving spectral efficiency and improving the data rates. With this UMTS network, long-term evolution (LTE) is under study for the purposes of further increasing high-speed data rates, providing low delay, and so on (non-patent literature 1).

In the third-generation system, it is possible to achieve a transmission rate of maximum approximately 2 Mbps on the downlink by using a fixed band of approximately 5 MHz. Meanwhile, in the LTE system, it is possible to achieve a transmission rate of about maximum 300 Mbps on the downlink and about 75 Mbps on the uplink by using a variable band which ranges from 1.4 MHz to 20 MHz. Furthermore, with the UMTS network, successor systems of LTE are also under study for the purpose of achieving further broadbandization and higher speed (for example, "LTE-advanced" (LTE-A)).

In the LTE-A system, carrier aggregation (CA) to achieve broadbandization by aggregating a plurality of fundamental frequency blocks (CCs: Component Carriers) of different frequency bands is under study. Also, with the LTE-A system, an agreement to make a single fundamental frequency block a frequency band (for example, 20 MHz) that can be used in the LTE system has been made, in order to achieve broadbandization while maintaining backward compatibility with the LTE system. For example, when five fundamental frequency blocks are aggregated, the system band becomes 100 MHz.

### Citation List

### Non-Patent Literature

Non-Patent Literature 1: 3GPP, TR25.912 (V7.1.0), "Feasibility Study for Evolved UTRA and UTRAN," Sept. 2006

### Summary of Invention

### Technical Problem

Now, as a promising technique for further improving the system performance of the LTE system, there is inter-cell orthogonalization. For example, in the LTE-A system, intra-cell orthogonalization is made possible by orthogonal multiple access on both the uplink and the downlink. That is to say, on the downlink, orthogonality is provided between user terminal UEs (User Equipment) in the frequency domain. On the other hand, between cells, like in W-CDMA, interference randomization by one-cell frequency re-use is fundamental.

So, in 3GPP (3rd Generation Partnership Project), coordinated multiple-point transmission/reception (CoMP) technique is under study as a technique for realizing inter-cell orthogonalization. In this CoMP transmission/reception, a plurality of cells coordinate and perform signal processing for transmission and reception for one user terminal UE or for a plurality of user terminal UEs. For example, for the downlink, simultaneous transmission of a plurality of cells adopting precoding, coordinated scheduling/beam forming, and so on are under study. By adopting these CoMP transmission/reception techniques, improvement of throughput performance is expected, especially with respect to user terminal UEs located on cell edges.

To apply CoMP transmission/reception techniques, it is necessary to feed back channel state information (CSI) of a plurality of cells, such as channel quality indicators (CQIs), from a user terminal to a radio base station apparatus. Also, since there are a number of kinds of transmission modes in CoMP transmission/reception techniques, the radio base station apparatus re-calculates and updates the CQIs that are fed back, to adapt to these transmission modes. Upon such updating, it is necessary to quickly feed back the CQIs and so on in each cell adopting CoMP, to the radio base station apparatus. Also, it is preferable to prevent the increase of the overhead of feedback information, and furthermore improve the accuracy of the updated CQIs.

The present invention has been made in view of the above, and it is therefore an object of the present invention to provide a radio communication system, a user terminal, a radio base station apparatus and a radio communication method that, when CoMP transmission is applied, allows suitable feedback of channel state information of multiple cells where CoMP is applied.

### Solution to Problem

The radio communication system of the present invention is a radio communication system to provide a plurality of radio base station apparatuses and a user terminal that is configured to be able to perform coordinated multiple-point transmission/reception with the plurality of radio base station apparatuses, and, in this radio communication system, the user terminal has a determining section that determines channel state information of each of multiple cells, a generating section that generates feedback information such that at least part of the determined channel state information of the multiple cells is combined and transmitted in a same subframe, and a transmission section that periodically feeds back the generated feedback information to a radio base station apparatus, which is one of multiple coordinated points, using a physical uplink control channel, and the radio base station apparatus comprises an updating section that updates the channel state information using the channel state information that is fed back from the user terminal.

### Advantageous Effects of Invention

According to the present invention, when CoMP transmission is applied, it is possible to feed back each CoMP cell's channel state information suitably.

### Brief Description of Drawings

FIG. 1 provides diagrams to explain coordinated multiple-point transmission;
FIG. 2 provides schematic diagrams to show configurations of radio base station apparatuses that are adopted in coordinated multiple-point transmission/reception;
FIG. 3 provides diagrams to show a channel configuration for mapping uplink signals and physical uplink control channel formats;
FIG. 4 is a diagram to show the relationship between CQI/PMI feedback types and PUCCH reporting modes;
FIG. 5 is a diagram to explain CQI values (WB CQIs) of an entire system band;
FIG. 6 is a diagram to explain CQI values (SB CQIs) of N subbands constituting a system band;
FIG. 7 provides diagrams to explain a reporting mode (extended mode 1-0) according to a first example;
FIG. 8 provides diagrams to explain a reporting mode (extended mode 1-1) according to a second example;
FIG. 9 provides diagrams to explain a reporting mode (extended mode 2-0) according to a third example;
FIG. 10 provides diagrams to explain a reporting mode (extended mode 2-1) according to a fourth example;
FIG. 11 provides diagrams to explain extended PUCCH formats 3a/3b/3c according to fifth to seventh examples;
FIG. 12 provides diagrams to explain radio base station apparatuses where a user terminal feeds back each cell's CSI when CoMP is applied;
FIG. 13 is a diagram to explain a system configuration of a radio communication system;
FIG. 14 is a diagram to explain an overall configuration of a radio base station apparatus;
FIG. 15 is a functional block diagram corresponding to a baseband processing section of a radio base station apparatus;
FIG. 16 is a diagram to explain an overall configuration of a user terminal; and
FIG. 17 is a functional block diagram corresponding to a baseband processing section of a user terminal.

### Description of Embodiments

Now, an embodiment of the present invention will be described below in detail with reference to the accompanying drawings.

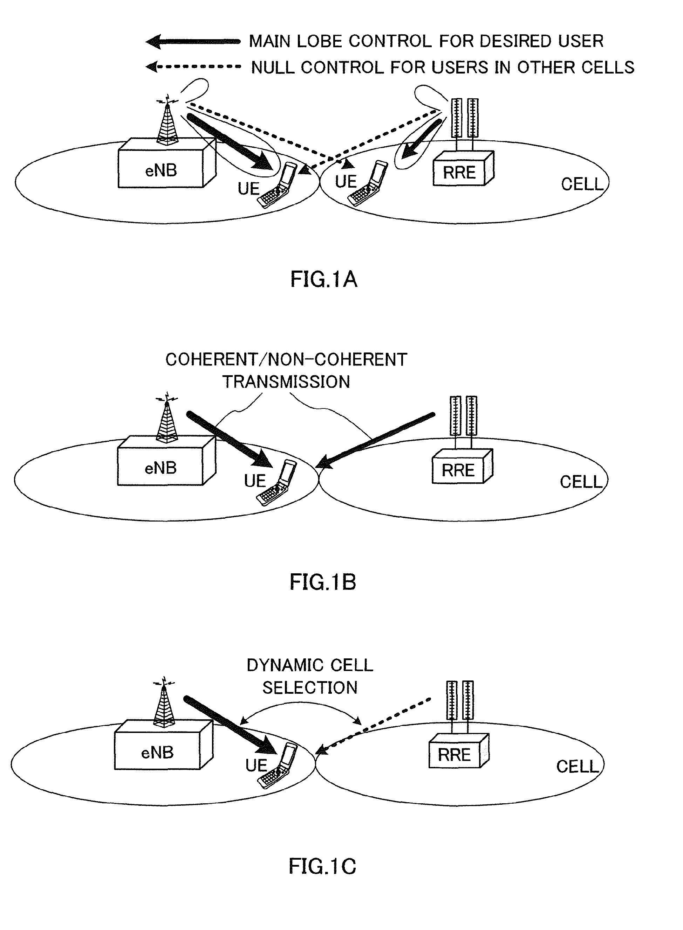

First, downlink CoMP transmission will be described using FIG. 1. Downlink CoMP transmission includes coordinated scheduling/coordinated beamforming (CS/CB), and joint processing. Coordinated scheduling/coordinated beamforming refers to the method of transmitting a shared data channel to one user terminal UE from only one cell, and, as shown in FIG. 1A, allocates radio resources in the frequency/space domain, taking into account interference from other cells and interference against other cells. Meanwhile, joint processing refers to the method of transmitting a shared data channel from a plurality of cells, at the same time, by applying precoding, and includes joint transmission to transmit a shared data channel from a plurality of cells to one user terminal UE as shown in FIG. 1B, and dynamic point selection (DPS) to select one cell instantaneously and transmit a shared data channel as shown in FIG. 1C. There is also a transmission mode referred to as dynamic point blanking (DPB), which stops data transmission in a certain region with respect to a transmission point that causes interference.

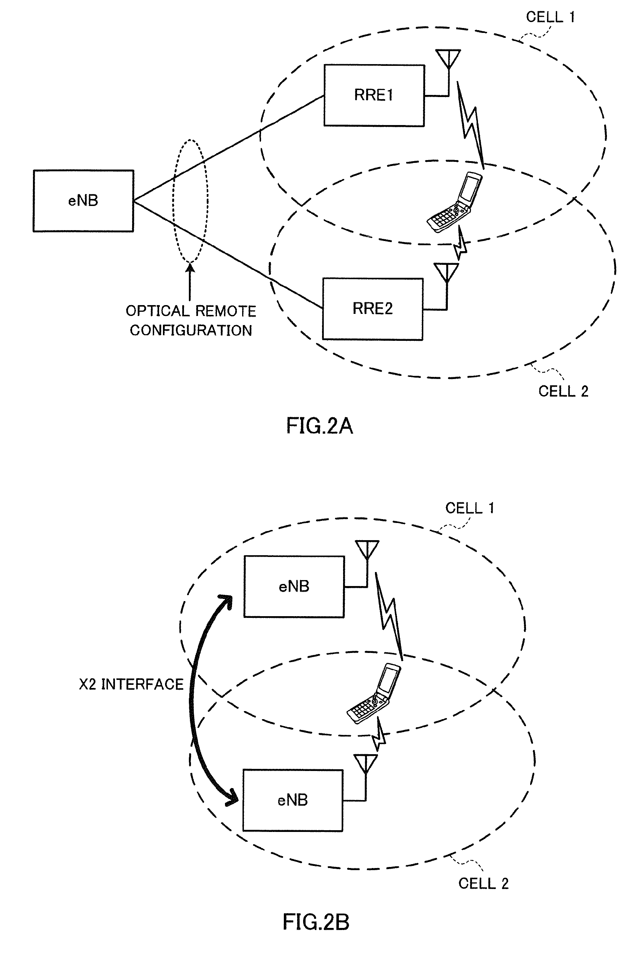

As for the configuration to implement CoMP transmission/reception, there are, for example, a configuration (centralized control based on an RRE configuration) to include a plurality of remote radio equipment (RREs) that are connected with a radio base station apparatus (radio base station apparatus eNB) by optical fiber and so on as shown in FIG. 2A, and a configuration (autonomous distributed control based on an independent base station configuration) of a radio base station apparatus (radio base station apparatus eNB) as shown in FIG. 2B. Note that, although FIG. 2A shows a configuration to include a plurality of remote radio equipment RREs, it is equally possible to use a configuration to include only single remote radio equipment RRE, as shown in FIG. 1.

In the configuration shown in FIG. 2A (RRE configuration), remote radio equipment RRE 1 and RRE 2 are controlled in a centralized fashion in a radio base station apparatus eNB. In the RRE configuration, the radio base station apparatus eNB (central base station) that performs baseband signal processing and control for a plurality of remote radio equipment RREs, and each cell (that is, each remote radio equipment RRE) are connected by baseband signals using optical fiber, so that it is possible to execute radio resource control between the cells in the central base station altogether. That is, the problems of signaling delay and overhead between radio base station apparatus eNBs, which become problems in an independent base station configuration, are insignificant, and high-speed radio resource control between cells becomes comparatively easy. Consequently, in the RRE configuration, it is possible to apply a method to use fast signal processing between cells such as simultaneous transmission of a plurality of cells, to the downlink.

On the other hand, in the configuration shown in FIG. 2B (independent base station configuration), a plurality of radio base station apparatus eNBs (or RREs) each perform radio resource allocation control such as scheduling. In this case, timing information and radio resource allocation information such as scheduling are transmitted to one radio base station apparatus eNB, if necessary, using the X2 interface between the radio base station apparatus eNB of cell 1 and the radio base station apparatus eNB of cell 2, for coordination between the cells.

CoMP transmission is applied to improve the throughput of user terminals located on cell edges. Consequently, control is designed to apply CoMP transmission when there is a user terminal located on a cell edge. In this case, a radio base station apparatus determines the difference between the quality information of each cell provided from the user terminal (for example, RSRP (Reference Signal Received Power), RSRQ (Reference Signal Received Quality), SINR (Signal Interference plus Noise Ratio) and so on), and, when the difference is equal to or less than a threshold value - - that is, when there is little difference in quality between cells -- decides that the user terminal is located on a cell edge, and applies CoMP transmission.

When CoMP transmission is applied, the user terminal feeds back the channel state information (CSI) of each CoMP cell to the radio base station apparatus of the serving cell. Also, the radio base station apparatus re-calculates CQIs for CoMP using each cell's CSI (in particular, CQI: Channel Quality Indicator) that is fed back, and updates the CSI. At this time, to place the updated values of CSI in the latest state, it is preferable to quickly feed back to the radio base station apparatus and re-calculate the CQI and so on of each cell where CoMP is applied. In particular, when the communication environment varies significantly, it is necessary to feed back each cell's CSI as quickly as possible.

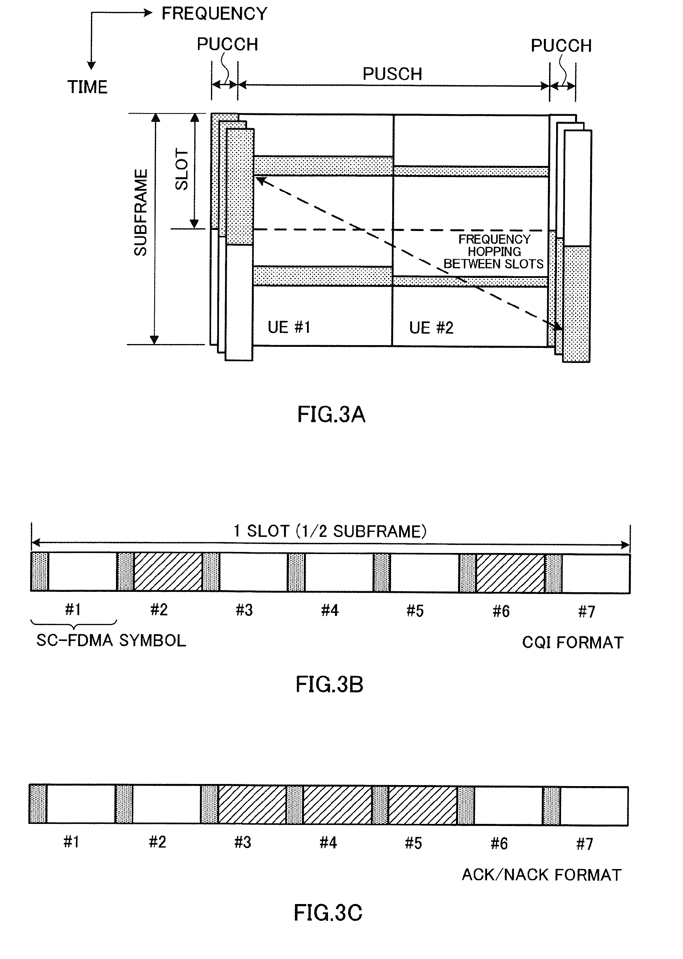

Now, as shown in FIG. 3, signals to be transmitted on the uplink are mapped to adequate radio resources and transmitted from a user terminal to a radio base station apparatus. In this case, user data (UE #1 and UE #2) is allocated to an uplink shared channel (PUSCH: Physical Uplink Shared Channel). Also, when control information is transmitted at the same time with the user data, the control information is time-multiplexed with the PUSCH, and, when control information alone is transmitted, the control information is allocated to an uplink control channel (PUCCH: Physical Uplink Control Channel). This control information to be transmitted on the uplink includes CQIs, retransmission acknowledgement signals (ACK/NACK) in response to downlink shared channel (PDSCH: Physical Downlink Shared Channel) signals, and so on.

The PUCCH typically assumes different subframe configurations when transmitting CQIs and when transmitting ACK/NACK (see FIGs. 3B and 3C). The PUCCH subframe configuration includes seven SC-FDMA symbols in one slot (1/2 subframe). Also, one SC-FDMA symbol includes twelve information symbols (subcarriers). To be more specific, in the CQI subframe configuration (CQI format (PUCCH formats 2, 2a and 2b)), as shown in FIG. 3B, reference signals (RSs) are multiplexed upon the second symbol (#2) and the sixth symbol (#6) in a slot, and control information (CQI) is multiplexed on the other symbols (the first symbol (#1), the third symbol (#3) to the fifth symbol (#5), and the seventh symbol (#7)). Also, in the ACK/NACK subframe configuration (ACK/NACK format (PUCCH formats 1, 1a and 1b)), as shown in FIG. 3C, reference signals are multiplexed on the third symbol (#3) to the fifth symbol (#5) in a slot, and control information (ACK/NACK) is multiplexed on the other symbols (the first symbol (#1), the second symbol (#2), the sixth symbol (#6) and the seventh symbol (#7)). In one subframe, a slot is repeated twice. Also, as shown in FIG. 3A, the PUCCH is multiplexed on the radio resources at both ends of the system band, and frequency hopping (inter-slot FH) is applied between the two slots in one subframe having different frequency bands.

Also, in the LTE system (Rel-10), as CSI feedback methods, there are a method of sending feedback periodically using an uplink control channel (PUCCH) (periodic CSI reporting using the PUCCH), and a method of sending feedback aperiodically using an uplink shared channel (PUSCH) (aperiodic CSI reporting using the PUSCH).

Also, in the LTE-A system, carrier aggregation (CA) to achieve broadbandization by aggregating a plurality of fundamental frequency blocks (component carriers (CCs)) of different frequency bands is applied. Meanwhile, in uplink transmission, carrying out uplink data transmission using a single fundamental frequency block in order to achieve single-carrier characteristics is under study.

In this case, since the capacity of PUCCH resources in one subframe is small, when feedback information (CSI) in response to signals transmitted on the downlink from multiple cells are fed back periodically using the PUCCH, each cell's CSI is fed back in different subframes. Likewise, upon the application of CoMP transmission/reception, when CSI for a plurality of CoMP cells is fed back to the radio base station apparatus of a predetermined cell (serving cell) using the PUCCH, each cell's CSI is fed back in different subframes. For example, CQIs in multiple cells where CoMP is applied are arranged in PUCCHs in different subframes and fed back from the user terminal to the radio base station apparatus.

Consequently, when CoMP is applied to multiple cells (for example, three cells), in order to allow the radio base station apparatus to acquire each cell's CQI, it is necessary to at least receive the PUCCHs of different subframes (here, three subframes) where each cell's CQI is arranged separately. As a result of this, the radio base station apparatus takes a predetermined period of time to update the CQIs, and therefore there is a threat that the accuracy of the updated CQI values may lower. In particular, when the communication environment varies significantly, it takes time to feed back each cell's CQI, and therefore there is a possibility that the accuracy of the updated CSI values lowers significantly.

The present inventors have focused on controlling the granularity (accuracy) of each cell's CSI when a user terminal feeds back CSI for a plurality of CoMP cells using the PUCCH. And, the present inventors have found out that it is possible to reduce the period of time the radio base station apparatus takes to acquire the CSI of all CoMP cells, by combining and arranging each cell's CSI in one subframe. Also, the present inventors have focused on a conventional PUCCH format that has been provided for to feed back retransmission acknowledgement signals of multiple cells, and arrived at applying this PUCCH format to feed back the CSI of multiple cells that perform CoMP. Now, the present embodiment will be described below in detail with reference to the accompanying drawings.

### (Frist Embodiment)

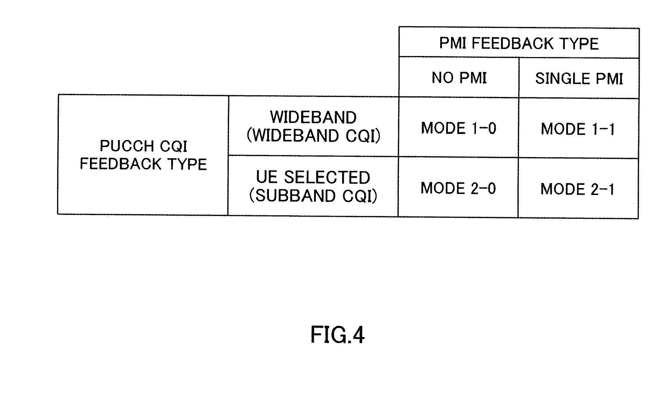

When a user terminal feeds back channel state information (CSI) periodically using the PUCCH, the types of CSI (CQI, RI (Rank Indicator), PMI (Precoding Matrix Indicator) and so on) to feed back are determiend based on the reporting mode that is reported from the radio base station apparatus. Now, CSI reporting modes (PUCCH CSI reporting modes) upon feedback of CSI applying the PUCCH (formats 2/2a/2b) will be described. FIG. 4 is a diagram to show the relationship between CQI/PMI feedback types and PUCCH reporting modes.

The CQI feedback types assume the case where the CQI to feed back corresponds to a wideband (system band) and the case where the CQI to feed back corresponds to a subband selected by a user terminal. Also, the PMI feedback types assume the case where there is no PMI to feed back and the case where there is one PMI to feed back.

As shown in FIG. 4, Rel-10, provides for reporting modes (mode 1-0, mode 1-1, mode 2-0 and mode 2-1) to combine a CQI feedback type and a PMI feedback type. Mode 1-0 combines a CQI feedback type to feed back the CQI of the wideband (hereinafter also referred to as "WB CQI"), and a PMI feedback type not to feed back a PMI. Mode 1-1 combines a CQI feedback type to feed back a WB CQI, and a PMI feedback type to feed back a PMI. Mode 2-0 combines a CQI feedback type to feed back the CQI (hereinafter referred to as "SB CQI") of a subband selected by a user terminal, and a PMI feedback type not to feed back a PMI. Mode 2-1 combines a CQI feedback type to feed back an SB CQI selected by a user terminal, and a PMI feedback type to feed back a PMI. Also, in each reporting mode, in addition to CQIs and PMIs, RIs are also fed back in separate subframes.

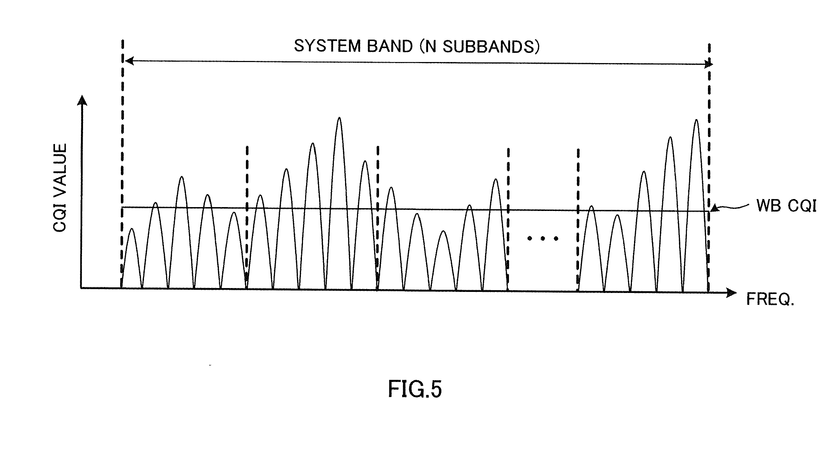

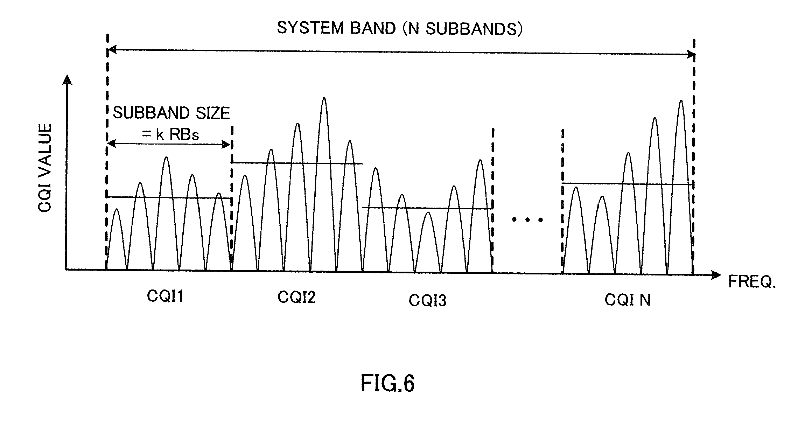

A WB CQI matches the average CQI value over the entire system band (see FIG. 5), and an SB CQI matches a CQI in part of the system band (see FIG. 6). Also, CSI reporting modes to use the PUCCH are reported from the radio base station apparatus to the user terminal through higher layer signaling.

Now, reporting modes (Extended modes) that are given anew by extending the above-described PUCCH reporting modes (PUCCH reporting modes) by reusing the PUCCH (formats 2/2a/2b) will be described below. Note that, although, in the following description, a case will be described as an example where CoMP is carried out between three cells (cell A, cell B and cell C), the present embodiment is by no means limited to the case where CoMP is applied to three cells, and is equally applicable to cases where CoMP is applied to two cells, four cells or more. Also, in the following description, cell A will be described as the serving cell.

### <First Example: extended mode 1-0>

First, the feedback method in the event a conventional PUCCH reporting mode (mode 1-0) is applied will be described.

In the conventional PUCCH reporting mode (conventional mode 1-0), a user terminal finds the CQI value of the wideband (WB CQI). When the system band is constituted with N subbands, the user terminal finds the average CQI value of the entire system band formed with N subbands (see FIG. 5). Also, if necessary, the user terminal determines the RI of the wideband (hereinafter also referred to as "WB RI"). Then, the user terminal arranges the WB CQI (or WB RI) in a PUCCH in one subframe and feeds this back to the radio base station apparatus periodically.

In the conventional PUCCH reporting mode (conventional mode 1-0), for every one cell, for example, a WB CQI (4 bits) or an RI (0 to 2 bits) is fed back in one subframe using a PUCCH.

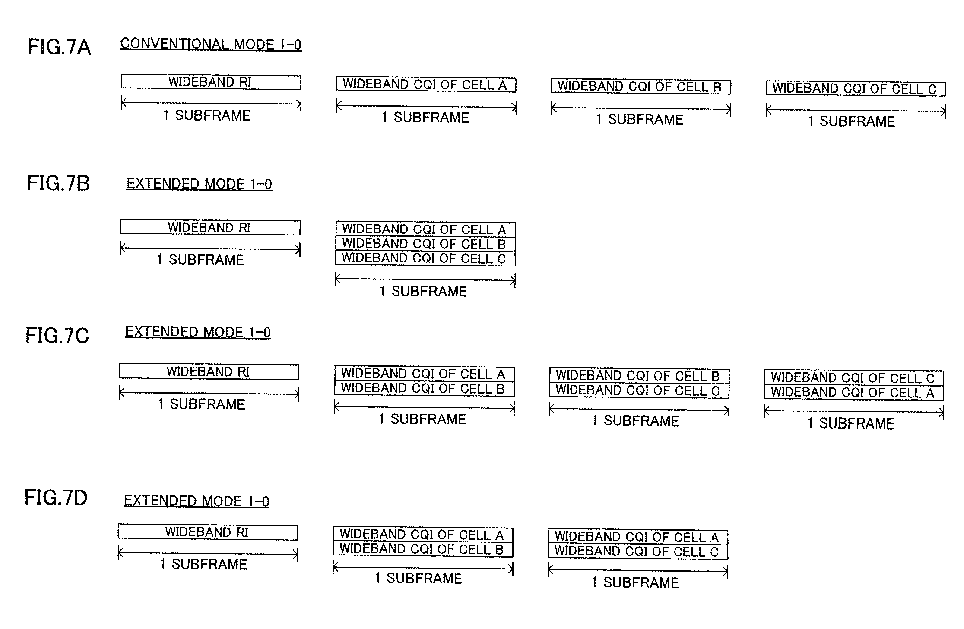

FIG. 7A illustrates a case where, in the conventional PUCCH reporting mode (conventional mode 1-0), the WB CQIs of multiple cells (three cells of cell A to cell C) and a WB RI are fed back. In this case, the WB CQIs of different cells are allocated to PUCCHs in different subframes and fed back. Likewise, the WB RI is also allocated to a PUCCH in a different subframe from those of the WB CQIs and fed back.

Consequently, when each cell's WB CQI is fed back to the radio base station apparatus of a predetermined cell (serving cell A), that radio base station apparatus needs to receive the PUCCHs of at least three different subframes in order to acquire the WB CQIs of all cells. As a result of this, there is a threat that the re-calculation of CSI (CSI update) in the radio base station apparatus is delayed, and the accuracy of updated CSI values lowers.

With the present embodiment, when each CoMP cell's CSI is fed back to the radio base station apparatus of a predetermined cell, part or all of the WB CQIs of multiple cells are combined, arranged in a PUCCH in one subframe (allocated to PUCCH resources) and fed back. Now, (three kinds of) feedback methods of a new PUCCH reporting mode (extended mode 1-0) will be described with reference to FIGs. 7B to 7D.

FIG. 7B illustrates a case where, when CoMP is applied to three cells (cell A to cell C), the WB CQIs of all cells are arranged in a PUCCH in one subframe (that is, arranged in the same subframe) and fed back. By this means, upon receiving one subframe of a PUCCH, the radio base station apparatus can acquire the WB CQIs of multiple cells (cell A to cell C).

Note that, with the present embodiment, the user terminal compresses the CQI values and so on, in order to arrange the CSI of multiple cells (for example, WB CQIs, SB CQIs and so on) in a PUCCH in one subframe (for example, performs sub-sampling). The granularity (accuracy) of each cell's CQI value after the compression may be made the same granularity in all cells, or the granularity of the CQI value of a predetermined cell (for example, the serving cell) may be made higher than the granularity of the CQI values of other cells. Note that the granularity of a CQI value refers to how fine (accurate) the CQI value is, and higher granularity means higher accuracy. Consequently, in case of replacinggranularity with the amount of information of CQI values, the higher the granularity of CQI values, the greater the amount of information (the number of bits) of CQI values, and, the lower the granularity of CQI values, the smaller the amount of information (the number of bits) of CQI values.

As shown in FIG. 7B, when each cell's WB CQI is arranged in the PUCCH in one subframe and fed back, cell A to cell C may all have the same granularity, or cell A may have higher granularity than cell B and cell C by means of sub-sampling. Note that, when the granularity of the WB CQI of the serving cell is made relatively high, an effect of achieving high accuracy of feedback can be expected when the serving cell is (likely to be) selected in CoMP (CS/DPS and so on) or when a fall back to single cell is made.

FIG. 7C illustrates a case where, among the WB CQIs of three cells (cell A to cell C), the WB CQIs of part of the cells are combined and allocated to PUCCH resource in one subframe and fed back. To be more specific, among the three cells, the WB CQIs of two cells (cell A and cell B, cell B and cell C, or cell C and cell A) are combined and allocated to the PUCCH in one subframe. By this means, the radio base station apparatus can acquire the WB CQIs of all CoMP cells (cell A to cell C) upon receiving two subframes of PUCCHs.

Also, in FIG. 7C, control is designed such that the proportion of each cell's WB CQI that is fed back to the radio base station apparatus in a predetermined period is the same. That is, the user terminal feeds back each cell's WB CQI evenly. In this case, it is preferable to perform sub-sampling such that each cell's WB CQI has the same granularity. By this means, it is possible to feed back each cell's WB CQI to the radio base station apparatus evenly.

FIG. 7D shows a case where the WB CQIs of multiple cells are combined such that the WB CQI of a predetermined cell (for example, cell A) is fed back preferentially (fed back a greater number of times in a predetermined period). This case is the same as FIG. 7C above in that, among the WB CQIs of multiple cells, the WB CQIs of part of the cells are combined, but the method of combining each cell's WB CQI is different.

To be more specific, when each cell's WB CQI is fed back, the WB CQI of cell A is always arranged in the PUCCH, and one of the WB CQIs of the other cell B and cell C is combined alternately with the WB CQI of cell A and arranged. In this case, the number of times the WB CQI of cell A is fed back becomes greater, and therefore it is preferable to perform sub-sampling such that the granularity of the WB CQI of cell A becomes higher than the granularity of the WB CQIs of the other cells. By making the granularity of the WB CQI of the serving cell high compared to the WB CQIs of other cells and feeding back the WB CQI of the serving cell preferentially, an effect of achieving high accuracy of feedback can be expected when the serving cell is (likely to be) selected in CoMP (CS/DPS and so on) or when a fall back to single cell is made.

As described above, by combining part or all of the WB CQIs of a plurality of CoMP cells and arranging these in the PUCCH of the same subframe, it is possible to reduce the time the radio base station apparatus takes to acquire the WB CQIs of all CoMP cells. By this means, it is possible to reduce the delay of the re-calculation of CSI (CSI update) in the radio base station apparatus and improve the accuracy of updated CSI values.

### <Second Example: extended mode 1-1>

First, the feedback method in the event a conventional PUCCH reporting mode (conventional mode 1-1) is applied will be described.

With the conventional PUCCH reporting mode (conventional mode 1-1), a user terminal finds a WB CQI and a wideband PMI (hereinafter also referred to as "WB PMI"). For example, the user terminal finds the average CQI value of the entire system band and a PMI that is optimal for the entire system band. Also, the user terminal determines a WB RI. Then, the user terminal arranges the WB CQI and the WB PMI, or the WB RI, in the PUCCH in one subframe, and feeds these back to the radio base station periodically.

In the conventional PUCCH reporting mode (conventional mode 1-1), for every one cell, for example, a WB CQI (4 or 7 bits) and a WB PMI (2 or 4 bits), or an RI (0 to 2 bits) are fed back in one subframe using a PUCCH.

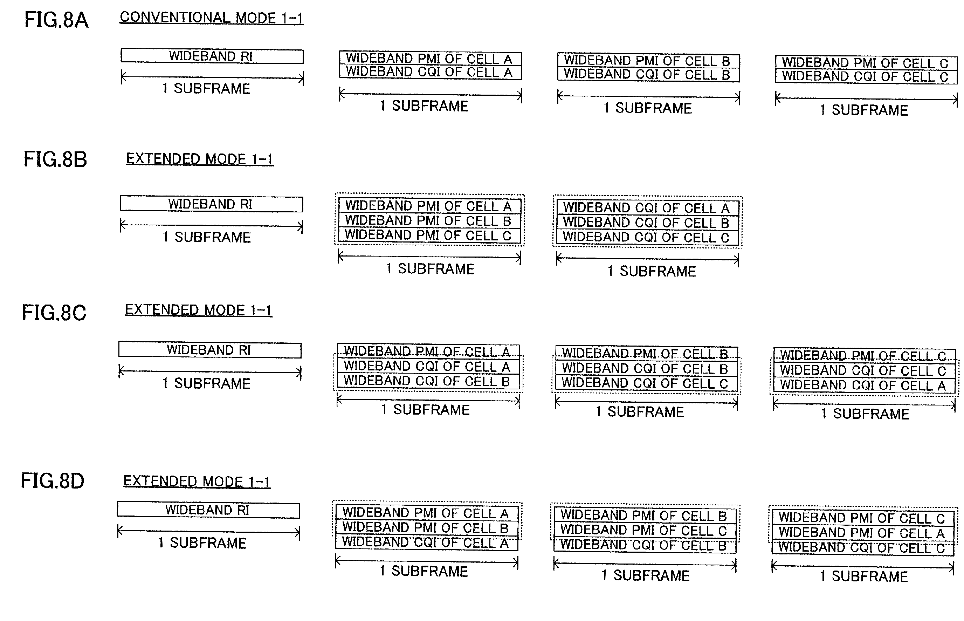

FIG. 8A shows a case where, in the conventional PUCCH reporting mode (conventional mode 1-1), the WB CQIs and WB PMIs of multiple cells (cell A to cell C) and a WB RI are fed back. In this case, each cell's WB CQI and WB PMI are arranged in the PUCCH of the same subframe and fed back. That is, the WB CQIs (WB PMIs) of different cells are arranged in the PUCCHs of different subframes and fed back.

Consequently, when each cell's WB CQI and WB PMI are fed back to the radio base station apparatus of a predetermined cell (serving cell A), the radio base station apparatus takes a period of at least three subframes to acquire the WB CQIs and WB PMIs of all CoMP cells. As a result of this, there is a threat that the re-calculation of CSI (CSI update) in the radio base station apparatus is delayed, and the accuracy of updated CSI values lowers.

With the present embodiment, when each CoMP cell's CSI is fed back to the radio base station apparatus of a predetermined cell, part or all of the WB CQIs (or WB PMIs) of different cells are combined, arranged and fed back in a PUCCH in one subframe. Now, (three kinds of) feedback methods of a new PUCCH reporting mode (extended mode 1-1) will be described below with reference to FIGs. 8B to 8D.

FIG. 8B shows a case where the WB CQIs of all cells are arranged in the PUCCH in one subframe and fed back when CoMP is applied to three cells (cell A to cell C). Likewise, the WB PMIs of all cells are arranged in a PUCCH in one subframe and fed back. By this means, upon receiving two subframes of PUCCHs, the radio base station apparatus can acquire the WB CQIs and WB PMIs of multiple cells where CoMP is applied.

Also, when the WB CQIs (or WB PMIs) of multiple cells are combined and allocated to PUCCH resources of small capacity, the CQI values and so on are compressed (for example, by performing sub-sampling), as described above. At this time, as noted earlier, the granularity of each cell's CQI value and so on after the compression can be set as appropriate.

FIG. 8C shows a case where, among the WB CQIs of three cells (cell A to cell C), the WB CQIs of part of the cells are combined, arranged and fed back in a PUCCH in one subframe. In this case, it is possible to combine and feed back the WB PMI of each cell with the WB CQIs of multiple cells.

To be more specific, as shown in FIG. 8C, among the three cells, the WB CQIs of two cells (cell A and cell B, cell B and cell C, or cell C and cell A) and the WB PMI of one cell are combined and arranged in a PUCCH in one subframe. By this means, upon receiving two subframes of PUCCHs, the radio base station apparatus can acquire the WB CQIs of all CoMP cells (cell A to cell C).

Also, in FIG. 8C, control is designed such that the proportion of each cell's WB CQI that is fed back to the radio base station apparatus in a predetermined period is the same. In this case, it is preferable to perform sub-sampling such that each cell's WB CQI has the same granularity. Besides, as shown in FIG. 7D above, it is possible to combine the WB CQIs of multiple cells such that the WB CQI of a predetermined cell (for example, cell A) is fed back preferentially.

FIG. 8D shows a case where, among the WB PMIs of three cells (cell A to cell C), the WB PMIs of part of the cells are combined, arranged and fed back in a PUCCH in one subframe. In this case, it is possible to combine and feed back each cell's WB CQI with the WB PMIs of multiple cells.

To be more specific, as shown in FIG. 8D, among the three cells, the WB PMIs of two cells (cell A and cell B, cell B and cell C, or cell C and cell A) and the WB CQI of one cell are combined and arranged in a PUCCH in one subframe. By this means, upon receiving two subframes of PUCCHs, the radio base station apparatus can acquire the WB PMIs of all CoMP cells (cell A to cell C). Also, in FIG. 8D, one subframe includes two WB PMIs, and transmission modes to use a double codebook are applicable.

As described above, by combining part or all of the WB CQIs (or WB PMIs) in multiple cells and arranging and feeding back these in the PUCCH of the same subframe, it is possible to reduce the period of time the radio base station apparatus takes to acquire the WB CQIs (or WB PMIs) of all CoMP cells. By this means, it is possible to reduce the delay of the re-calculation of CSI (CSI update) in the radio base station apparatus and improve the accuracy of updated CSI values.

### <Third Example: extended mode 2-0>

First, the feedback method in the event a conventional PUCCH reporting mode (conventional mode 2-0) is applied will be described.

In the conventional PUCCH reporting mode (conventional mode 2-0), a user terminal finds the CQI values (CQI 1, CQI 2 ... CQI N) of N subbands, and also finds the average CQI value of the entire wideband formed with N subbands. When the system band is constituted with N subbands, one subband is formed with k RBs (Resource Blocks). Also, if necessary, the user terminal determines a WB RI. Then, the user terminal arranges a WB CQI, an SB CQI or a WB RI in the PUCCH in one subframe and feeds these back periodically. Note that, as the SB CQI, the user terminal selects the CQI value of one specific subband having the largest CQI in the N subbands, and feeds this back with the subband's position information.

In the conventional PUCCH reporting mode (conventional mode 2-0), for every one cell, for example, an SB CQI (4 bits + position information L bits), a WB CQI (4 bits) or an RI (0 to 2 bits) are fed back in one subframe using a PUCCH.

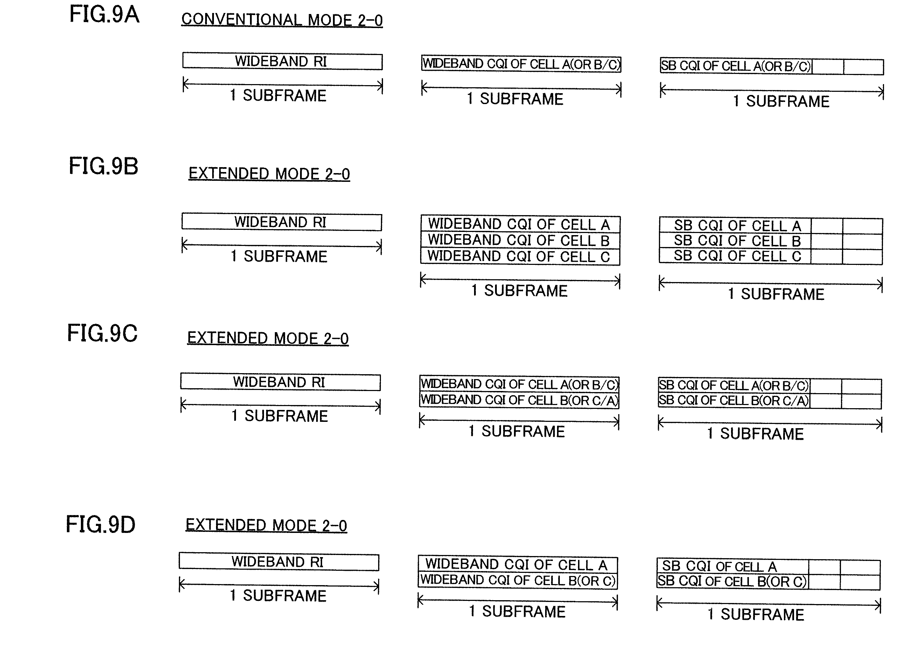

FIG. 9A shows a case where, in the conventional PUCCH reporting mode (conventional mode 2-0), each WB CQI, SB CQI and WB RI of a plurality of cells (cell A to cell C) is fed back in one subframe. In this case, the WB CQIs and SB CQIs of different cells are all arranged in the PUCCHs of different subframes and fed back. Likewise, the WB RI is also fed back in separate subframes.

With the present embodiment, when each CoMP cell's CSI is fed back to the radio base station apparatus of a predetermined cell, part or all of the WB CQIs of multiple cells are combined and part or all of the SB CQIs are combined, and arranged and fed back in a PUCCH in one subframe. Now, (three kinds of) feedback methods of a new PUCCH reporting mode (extended mode 2-0) will be described below with reference to FIGs. 9B to 9D.

FIG. 9B shows a case where, when CoMP is applied to three cells (cell A to cell C), the WB CQIs of all cells and the SB CQIs of all cells are arranged in a PUCCH in one subframe and fed back. By this means, the radio base station apparatus can acquire the WB CQIs and SB CQIs of multiple cells (cell A to cell C) upon receiving two subframes of PUCCHs.

FIG. 9C shows a case where, among the WB CQIs of three cells (cell A to cell C), the WB CQIs of part of the cells are combined, arranged and fed back in a PUCCH in one subframe. Likewise, the SB CQIs of part of the cells are combined and arranged in the PUCCH in one subframe and fed back.

To be more specific, among the three cells, the WB CQIs of two cells (cell A and cell B, cell B and cell C, or cell C and cell A) are combined and arranged in the PUCCH of one subframe. Likewise, the SB CQIs of two cells (cell A and cell B, cell B and cell C, or cell C and cell A) are combined and arranged in the PUCCH of one subframe. By this means, the radio base station apparatus can acquire the WB CQIs and SB CQIs of all CoMP cells (cell A to cell C) upon receiving four subframes of PUCCHs.

Also, in FIG. 9C, control is designed such that the proportion of each cell's WB CQI and SB CQI that are fed back to the radio base station apparatus in a predetermined period is the same. In this case, it is preferable to perform sub-sampling such that each cell's WB CQI and SB CQI have the same granularity. By this means, it is possible to feed back each cell's WB CQI and SB CQI to the radio base station apparatus evenly.

FIG. 9D shows a case where the WB CQIs and SB CQIs of multiple cells are combined such that the WB CQI and SB CQI of a predetermined cell (for example, cell A) are fed back preferentially. This case is the same as FIG. 9C above in that, among the WB CQIs (or SB CQIs) of multiple cells, the WB CQIs (or SB CQIs) of part of the cells are combined, but the method of combining each cell's WB CQI (or SB CQI) is different.

To be more specific, when each cell's WB CQI is fed back, the WB CQI of cell A is always arranged in the PUCCH, and one of the WB CQIs of the other cell B and cell C is combined alternately with the WB CQI of cell A. Likewise, when each cell's SB CQI is fed back, the SB CQI of cell A is always arranged in the PUCCH, and one of the SB CQIs of the other cell B and cell C is combined alternately with the SB CQI of cell A. In this case, the number of times the WB CQI and SB CQI of cell A are fed back increases, so that it is preferable to perform sub-sampling such that the granularity of the WB CQI and SB CQI of cell A becomes higher than the granularity of the WB CQIs and SB CQIs of the other cells.

As described above, by combining, arranging and feeding back part or all of the WB CQIs and SB CQIs of a plurality of CoMP cells in the PUCCH of the same subframe, it is possible to reduce the period of time the radio base station apparatus takes to acquire the WB CQIs and SB CQIs of all CoMP cells. By this means, it is possible to reduce the delay of the re-calculation of CSI (CSI update) in the radio base station apparatus and improve the accuracy of updated CSI values.

### <Fourth Example: extended mode 2-1>

First, the feedback method in the event a conventional PUCCH reporting mode (conventional mode 2-1) is applied will be described.

In the conventional PUCCH reporting mode (conventional mode 2-1), if necessary, a user terminal finds a SB CQI, a WB CQI and a WB PMI, or a WB RI. Then, the user terminal arranges a WB CQI and a WB PMI, an SB CQI, or a WB RI in a PUCCH in one subframe, and feeds back these periodically. Note that, as the SB CQI, the user terminal selects the CQI value of one specific subband having the largest CQI in the N subbands, and feeds this back with the subband's position information.

In the conventional PUCCH reporting mode (conventional mode 2-1), for every one cell, for example, a WB CQI + a WB PMI (6 to 11 bits), an SB CQI (4 to 7 bits + position information L bits), or an RI (1 or 2 bits) are fed back in one subframe using a PUCCH.

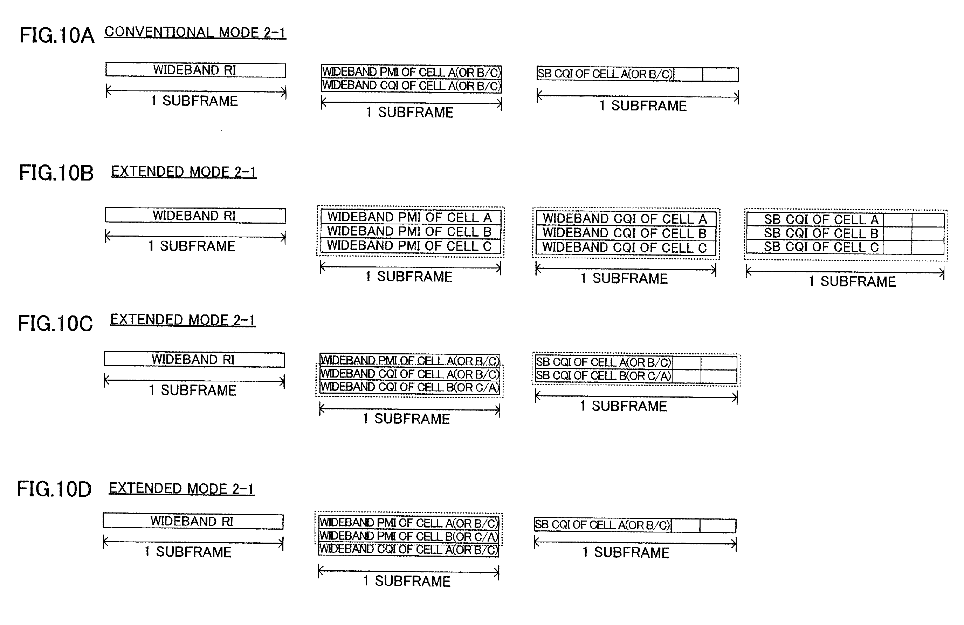

FIG. 10A shows a case where, in the conventional PUCCH reporting mode (conventional mode 2-1), each WB CQI and WB PMI, SB CQI, and WB RI of multiple cells (cell A to cell C) are fed back in different subframes. In this case, the WB CQIs and WB PMIs of varying cells are arranged in the PUCCHs of different subframes and fed back. Likewise, each cell's SB CQI is arranged in the PUCCHs of different subframes.

With the present embodiment, when each CoMP cell's CSI is fed back to the radio base station apparatus of a predetermined cell, part or all of the WB CQIs (or WB PMIs) of multiple cells are combined, and also part or all of the SB CQIs are combined and arranged in a PUCCH in one subframe and fed back. Now, (three kinds of) feedback methods of a new PUCCH reporting mode (extended mode 2-1) will be described below with reference to FIGs. 10B to 10D.

FIG. 10B shows a case where, when CoMP is applied to three cells (cell A to cell C), the WB CQIs, the WB PMIs, and the SB CQIs of all cells are arranged and fed back in a PUCCH in one subframe. By this means, the radio base station apparatus can acquire the WB CQIs, WB PMIs and SB CQIs of multiple cells (cell A to cell C) upon receiving three subframes of PUCCHs.

FIG. 10C shows a case where, among the WB CQIs of three cells (cell A to cell C), the WB CQIs of part of the cells are combined, arranged and fed back in PUCCH resources in one subframe. In this case, it is possible to combine the WB PMIs of multiple cells with the WB CQIs which also combine multiple cells, and feed them back. As for the SB CQIs, the SB CQIs of part of the cells are combined, arranged and fed back in PUCCH resources in one subframe.

To be more specific, among the three cells, the WB CQIs of two cells (cell A and cell B, cell B and cell C, or cell C and cell A) and the WB PMI of one cell are combined, and arranged in a PUCCH in one subframe. Also, the SB CQIs of two cells (cell A and cell B, cell B and cell C, or cell C and cell A) are combined and arranged in a PUCCH in one subframe. By this means, the radio base station apparatus can acquire the WB CQIs and SB CQIs of multiple CoMP cells (cell A to cell C) upon receiving four subframes of PUCCHs.

Also, in FIG. 10C, control is designed such that the proportion of each cell's WB CQI (or SB CQI) that is fed back to the radio base station apparatus in a predetermined period is the same. In this case, it is preferable to perform sub-sampling such that each cell's WB CQI (or SB CQI) has the same granularity. Besides, as shown in FIG. 7D above, it is equally possible to combine the WB CQIs (or SB CQIs) of the cells such that the WB CQI (or SB CQI) of a predetermined cell is fed back preferentially.

FIG. 10D shows a case where, among the WB PMIs of three cells (cell A to cell C), the WB PMIs of part of the cells are combined, arranged and fed back in PUCCH resources in one subframe. In this case, it is possible to combine the WB CQIs of multiple cells with the WB PMIs which also combine multiple cells, and feed them back. Also, it is possible to make the number of subframes to use to feed back the SB CQIs of multiple cells and the number of subframes to use to feed back the WB CQIs of multiple cells the same.

To be more specific, among three cells, the WB PMIs of two cells (cell A and cell B, cell B and cell C, or cell C and cell A) and the WB CQI of one cell are combined and arranged in PUCCH resources in one subframe. Also, each cell's SB CQI is fed back in separate subframes. By this means, the radio base station apparatus can acquire the WB PMIs of all CoMP cells (cell A to cell C) upon receiving two subframes of PUCCHs. Also, in FIG. 10D, one subframe includes two WB PMIs, and transmission modes to use a double codebook are applicable.

As described above, by combining, arranging and feeding back part or all of CSI (WB CQIs, WB PMIs and SB CQIs) in a plurality of CoMP cells in PUCCH resources in the same subframe, it is possible to reduce the period of time the radio base station apparatus takes to acquire the WB CQIs, WB PMIs and SB CQIs of all CoMP cells. By this means, it is possible to reduce the delay of the re-calculation of CSI (CSI update) in the radio base station apparatus and improve the accuracy of updated CSI values.

### (Second Embodiment)

Next, a method of feeding back CSI for multiple cells by re-using conventional PUCCH format 3 will be described. First, conventional PUCCH format 3 will be described briefly.

As described above, in the LTE-A system, carrier aggregation (CA) to achieve broadbandization by aggregating a plurality of fundamental frequency blocks (CCs) of different frequency bands is applied. In this case, retransmission acknowledgement signals (ACK/NACK) in response to the data channel (PDSCH) transmitted in a plurality of downlink CCs also need to be transmitted from a single CC alone, in order to maintain uplink single-carrier transmission performance.

Consequently, in the LTE-A system, generating retransmission acknowledgement signals at a user terminal, on a per CC basis, based on the PDSCH of each of a plurality of CCs received from a radio base station apparatus, and feeding them back using an uplink control channel of a predetermined CC (PCC), is under study. For example, when five CCs are applied, it is necessary to feed back ten bits of ACK/NACK using the PCC.

As a PUCCH format upon transmitting feedback information in response to such PDSCHs, transmitted in a plurality of downlink CCs, PUCCH format 3 for supporting more ACK/NACK bits has been provided for. Similar to the PDSCH, PUCCH format 3 has characteristics of being generated by DFT (Discrete Fourier Transform)-based precoding and multiplexing different UEs by means of OCC. That is, conventional PUCCH format 3 is provided for as an ACK/NACK feedback format for multiple cells when CA is applied.

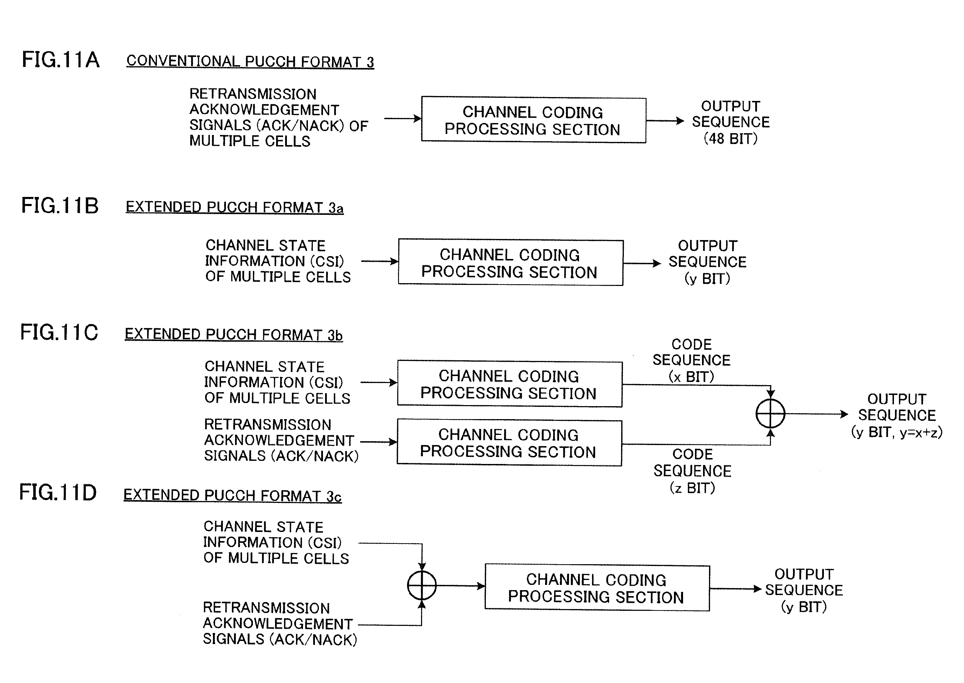

In FIG. 11A, in conventional PUCCH format 3, channel coding is performed with ACK/NACK, and 48 bits are output as the number of bits per subframe. The sequence of 48 bits that is output is converted into 24 symbols through phase shift keying modulation (QPSK), and, after that, a DFT process is performed.

With the present embodiment, channel state information (CSI) of multiple cells where CoMP is applied is fed back utilizing PUCCH format 3. In this case, there is an example to feed back only the CSI of multiple cells (fifth example),
an example to multiplex the CSI and retransmission acknowledgement signals of multiple cells (ACK/NACK) that are subject to channel coding (sixth example), and
an example to multiplex the CSI and retransmission acknowledgement signals of multiple cells (ACK/NACK), and, after that, perform channel coding (joint coding) (seventh example). Note that, in the following description, formats to extend conventional PUCCH format 3 will be referred to as extended PUCCH formats 3a, 3b and 3c, but these are by no means limiting.

### <Fifth Example: extended PUCCH format 3a>

With the fifth example, only the CSI of multiple cells where CoMP is applied is fed back using conventional PUCCH format 3. That is, in extended PUCCH format 3a, ACK/NACK is not fed back. To be more specific, a user terminal performs channel coding of the CSI of multiple cells (for example, CQIs, PMIs, RIs and so on) in a channel coding processing section, and outputs y bits (for example, 48 bits) (see FIG. 11 B). After that, similar to the processing according to conventional PUCCH format 3, feedback information is generated by DFT (Discrete Fourier Transform)-based precoding, and different UEs are multiplexed by means of OCC.

### <Sixth Example: extended PUCCH format 3b>

With the sixth example, the CSI of a plurality of CoMP cells and retransmission acknowledgement signals (ACK/NACK) are fed back using conventional PUCCH format 3. In extended PUCCH format 3b, the CSI and retransmission acknowledgement signals of a plurality of cells are subjected to channel coding separately, and, after that, multiplexed (added up, for example). To be more specific, a user terminal performs channel coding of the CSI of multiple cells into a code sequence of x bits in a channel coding processing section, and also performs channel coding of the retransmission acknowledgement signals into a code sequence of z bits in the channel coding processing section. After that, the CSI and retransmission acknowledgement signals of multiple cells having been subjected to channel coding are multiplexed (added) and output as a sequence of y bits (y=x+z) (see FIG. 11C). After that, similar to the processing according to conventional PUCCH format 3, feedback information is generated by DFT (Discrete Fourier Transform)-based precoding, and different UEs are multiplexed by means of OCC.

### <Seventh Example: extended PUCCH format 3c>

With the seventh example, the CSI of a plurality of CoMP cells and retransmission acknowledgement signals (ACK/NACK) are fed back using conventional PUCCH format 3. In extended PUCCH format 3c, the CSI and retransmission acknowledgement signals of a plurality of cells are multiplexed (added) and, after that, subjected to a channel coding process. That is, the CSI and retransmission acknowledgement signals of a plurality of cells are subjected to joint coding. To be more specific, a user terminal multiplexes the CSI and retransmission acknowledgement signals of multiple cells and, after that, performs channel coding (joint coding) in a channel coding processing section and outputs y bits (see FIG. 11D). After that, similar to the processing according to conventional PUCCH format 3, feedback information is generated by DFT (Discrete Fourier Transform)-based precoding, and different UEs are multiplexed by means of OCC.

In this way, a user terminal according to the present embodiment feeds back the CSI of multiple cells where CoMP is applied, by using a physical uplink control channel (PUCCH) format for retransmission acknowledgement signal (ACK/NACK) feedback for multiple cells. Also, the user terminal can feed back the CSI of multiple cells without sending retransmission acknowledgement signals in predetermined subframes. Also, upon feeding back the CSI and retransmission acknowledgement signals of multiple cells, the user terminal can perform channel coding for the CSI and retransmission acknowledgement signals of multiple cells separately, and, after that, multiplex the CSI bits and the retransmission acknowledgement signal bits of multiple cells, and arrange these in the PUCCH. Also, upon feeding back the CSI and retransmission acknowledgement signals of multiple cells, the user terminal can multiplex the CSI and retransmission acknowledgement signals of multiple cells, and, after that, perform channel coding (joint coding) of the multiplexed CSI and retransmission acknowledgement signals of multiple cells and arrange them in the PUCCH. Note that the channel state information of multiple cells can be combined as appropriate and can use, for example, the combinations shown with the above examples.

In this way, by feeding back the channel state information of multiple cells where CoMP is applied using conventional PUCCH format 3 that is applied for ACK/NACK feedback for multiple cells, it is possible to reduce the period of time the radio base station apparatus takes to acquire the CSI of all CoMP cells. By this means, it is possible to reduce the delay of the re-calculation of CSI (CSI update) in the radio base station apparatus and improve the accuracy of updated CSI values.

### (Third Embodiment)

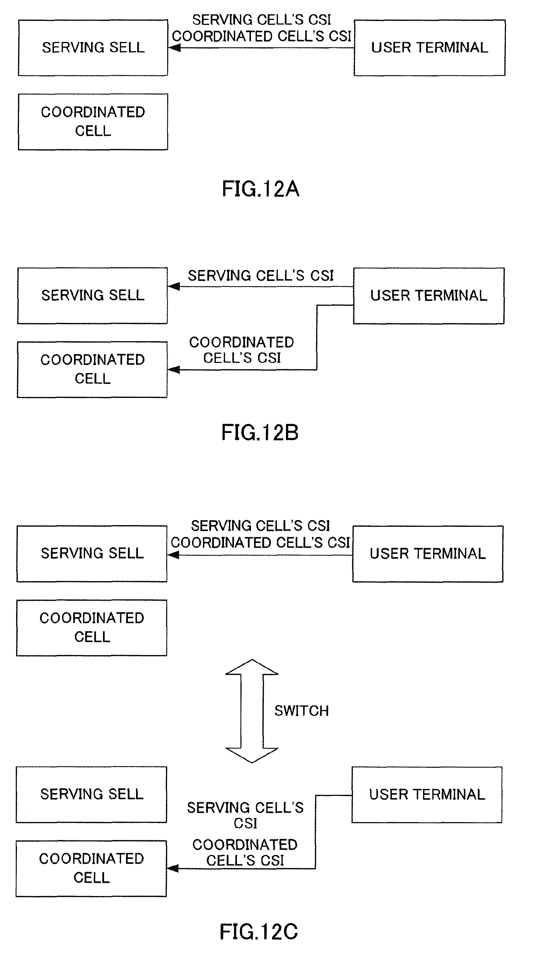

A case will be described here with the present embodiment where the radio base station apparatus, to which a user terminal feeds back the CSI of multiple cells where CoMP is applied. With the above embodiments, cases have been described where a user terminal feeds back each cell's CSI to the radio base station apparatus of a predetermined cell (serving cell) among a plurality of cells where CoMP is applied (see FIG. 12A). However, the present invention is by no means limited to this, and the examples described below are also applicable.

As shown in FIG. 12B, a user terminal may feed back each cell's CSI to the radio base station apparatus of the corresponding cell. To be more specific, the user terminal feeds back the CSI of the serving cell to the serving cell and feeds back the CSI of other cells (coordinated cells) to the corresponding coordinated cells.

Also, when there are cells where the uplink performance is good (received power is high), the user terminal may feed back the cells' CSI all together. For example, when two-cell CoMP is applied, the CSI of the cells is fed back to the cell of the better uplink performance between the serving cell and the coordinated cell. In this case, as shown in FIG. 12C, it is also possible to switch the cell to feed back the CSI of the cells to, on a dynamic basis. As for the method of feeding back each cell's CSI, the methods shown with the above first embodiment and the second embodiment can be applied as appropriate

### (Configuration of radio communication system)

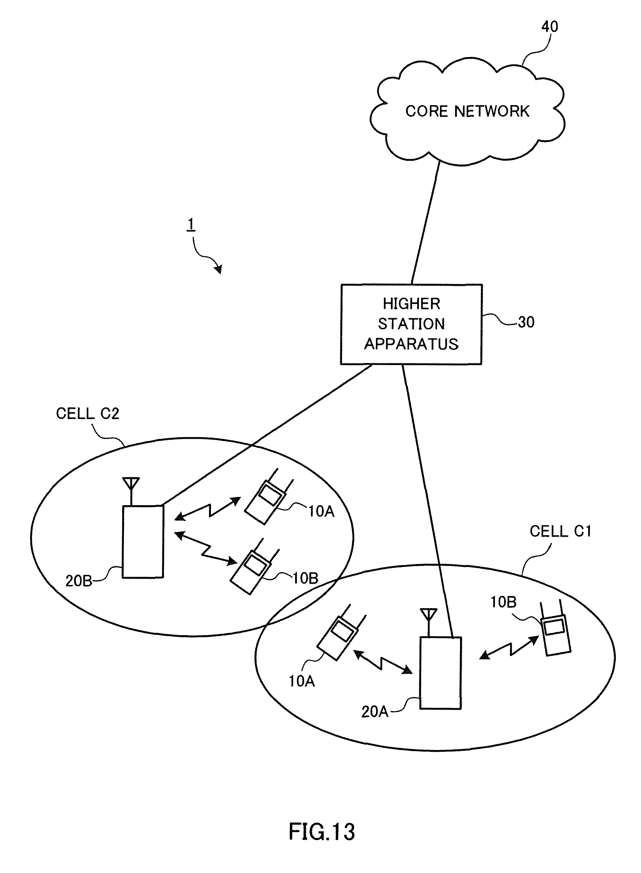

Now, a radio communication system according to an embodiment of the present invention will be described in detail. FIG. 13 is a diagram to explain a system configuration of a radio communication system according to the present embodiment. Note that the radio communication system shown in FIG. 13 is a system to accommodate, for example, the LTE system or SUPER 3G. In this radio communication system, carrier aggregation to group a plurality of fundamental frequency blocks into one, where the system band of the LTE system is one unit, is used. Also, this radio communication system may be referred to as "IMT-Advanced" or may be referred to as "4G."

As shown in FIG. 13, the radio communication system 1 is configured to include radio base station apparatuses 20A and 20B, and a plurality of first and second user terminals 10A and 10B that communicate with these radio base station apparatuses 20A and 20B. The radio base station apparatuses 20A and 20B are connected with a higher station apparatus 30, and this higher station apparatus 30 is connected with a core network 40. Also, the radio base station apparatuses 20A and 20B are connected with each other by wire connection or by wireless connection. The first and second user terminals 10A and 10B are able to communicate with the radio base station apparatuses 20A and 20B in cells C1 and C2. Note that the higher station apparatus 30 may be, for example, an access gateway apparatus, a radio network controller (RNC), a mobility management entity (MME) and so on, but is by no means limited to these. Also, between cells, when necessary, CoMP transmission is controlled by a plurality of base stations.

Although the first and second user terminals 10A and 10B may be either LTE terminals or LTE-A terminals, the following description will be given simply with respect to first and second user terminals, unless specified otherwise. Also, although the first and second user terminals 10A and 10B will be described to perform radio communication with the radio base station apparatuses 20A and 20B for ease of explanation, more generally, user equipment (UEs), including both mobile terminal apparatuses and fixed terminal apparatuses, may be used as well.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink, but the uplink radio access scheme is by no means limited to this. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, the system band into bands formed with one or continuous resource blocks, and allowing a plurality of terminals to use mutually different bands.

Downlink communication channels include a PDSCH (Physical Downlink Shared Channel), which is used by the first and second user terminals 10A and 10B on a shared basis as a downlink data channel, and downlink L1/L2 control channels (PDCCH, PCFICH, PHICH). Transmission data and higher control information are transmitted by the PDSCH. Scheduling information and so on for the PDSCH and the PUSCH are transmitted by the PDCCH (Physical Downlink Control Channel). The number of OFDM symbols to use for the PDCCH is transmitted by the PCFICH (Physical Control Format Indicator Channel). HARQ ACK and NACK for the PUSCH are transmitted by the PHICH (Physical Hybrid-ARQ Indicator Channel).

Uplink communication channels include a PUSCH (Physical Uplink Shared Channel), which is used by each user terminal on a shared basis as an uplink data channel, and a PUCCH (Physical Uplink Control Channel), which is an uplink control channel. By means of this PUSCH, transmission data and higher control information are transmitted. Furthermore, downlink received quality information (CQI), ACK/NACK and so on are transmitted by the PUCCH.

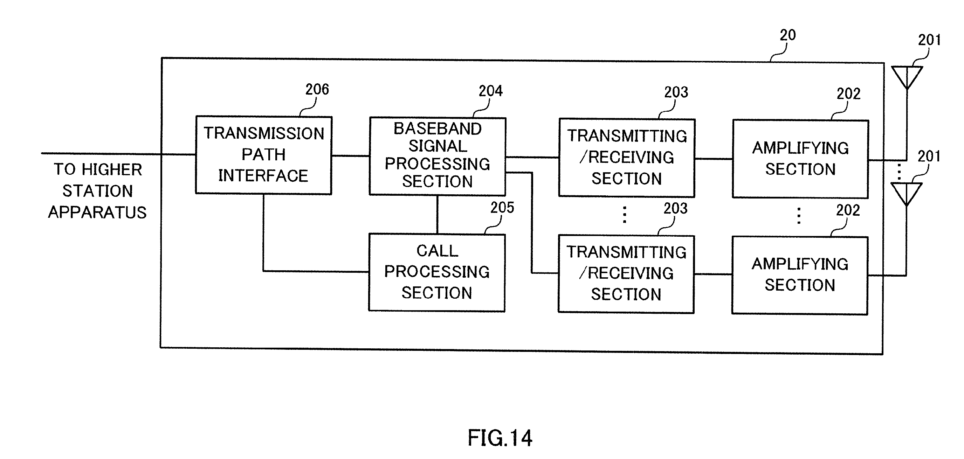

An overall configuration of the radio base station apparatus according to the present embodiment will be described with reference to FIG. 14. Note that the radio base station apparatuses 20A and 20B have the same configuration and therefore hereinafter will be described simply as "radio base station apparatus 20." Also, the first and second user terminals 10A and 10B, which will be described later, also have the same configuration and therefore hereinafter will be described simply as "user terminal 10."

The radio base station apparatus 20 includes transmitting/receiving antennas 201, amplifying sections 202, transmitting/receiving sections (reporting sections) 203, a baseband signal processing section 204, a call processing section 205 and a transmission path interface 206. Transmission data to be transmitted from the radio base station apparatus 20 to the user terminal on the downlink is input from the higher station apparatus 30 into the baseband signal processing section 204 via the transmission path interface 206.

In the baseband signal processing section 204, a signal of a downlink data channel is subjected to a PDCP layer process, division and coupling of transmission data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process, and a precoding process. Furthermore, a signal of a physical downlink control channel, which is a downlink control channel, is also subjected to transmission processes such as channel coding and an inverse fast Fourier transform.

Also, the baseband signal processing section 204 reports control information for allowing each user terminal 10 to perform radio communication with the radio base station apparatus 20, to the user terminals 10 connected to the same cell, by a broadcast channel. The information for allowing communication in the cell includes, for example, the uplink or downlink system bandwidth, root sequence identification information (root sequence index) for generating random access preamble signals in the PRACH (Physical Random Access Channel), and so on.

Baseband signals that are output from the baseband signal processing section 204 are converted into a radio frequency band in the transmitting/receiving sections 203. The amplifying sections 202 amplify the radio frequency signals having been subjected to frequency conversion, and output the results to the transmitting/receiving antennas 201. Note that the transmitting/receiving sections 203 constitute a receiving means to receive uplink signals including information about phase differences between multiple cells and so on and PMIs, and a transmitting means to transmit transmission signals by coordinated multiple-point transmission. Also, the transmitting/receiving sections 203 function as a reporting section when a radio base station apparatus reports candidate inter-cell CSI values to the user terminal.

Meanwhile, as for signals to be transmitted from the user terminal 10 to the radio base station apparatus 20 on the uplink, radio frequency signals that are received by the transmitting/receiving antennas 201 are amplified in the amplifying sections 202, converted into baseband signals through frequency conversion in the transmitting/receiving sections 203, and input in the baseband signal processing section 204.

The baseband signal processing section 204 performs an FFT process, an IDFT process, error correction decoding, a MAC retransmission control receiving process, and RLC layer and PDCP layer receiving processes, of the transmission data that is included in the baseband signal received on the uplink. The decoded signals are transferred to the higher station apparatus 30 through the transmission path interface 206.

The call processing section 205 performs call processing such as setting up and releasing communication channels, manages the state of the radio base station apparatus 20 and manages the radio resources.

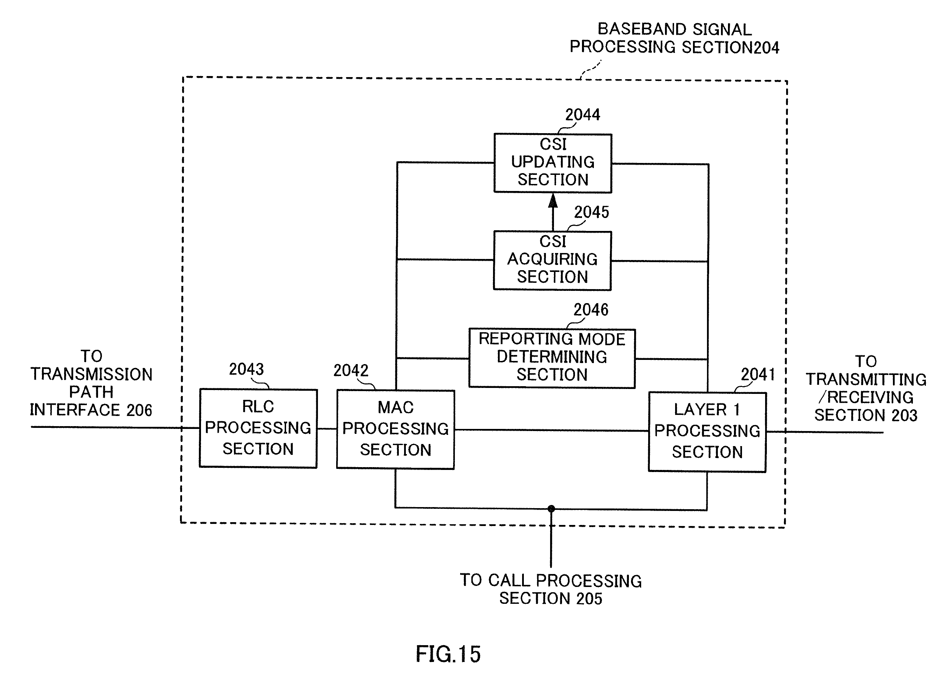

FIG. 15 is a block diagram showing a configuration of a baseband signal processing section in the radio base station apparatus shown in FIG. 14. The baseband signal processing section 204 is primarily formed with a layer 1 processing section 2041, a MAC processing section 2042, an RLC processing section 2043, a CSI updating section 2044, a CSI acquiring section 2045, and a reporting mode determining section 2046.

The layer 1 processing section 2041 mainly performs processes related to the physical layer. The layer 1 processing section 2041 performs processes for a signal received on the uplink, including, for example, channel decoding, a discrete Fourier transform (DFT), frequency demapping, an inverse fast Fourier transform (IFFT), data demodulation and so on. Also, the layer 1 processing section 2041 performs processes for a signal to transmit on the downlink, including channel coding, data modulation, frequency mapping, an inverse fast Fourier transform (IFFT) and so on.

The MAC processing section 2042 performs processes for a signal that is received on the uplink, such as MAC layer retransmission control, scheduling for the uplink/downlink, transport format selection for the PUSCH/PDSCH, resource block selection for the PUSCH/PDSCH and so on.

The RLC processing section 2043 performs, for a packet that is received on the uplink/a packet to transmit on the downlink, packet division, packet combining, RLC layer retransmission control and so on.

The CSI acquiring section 2045 acquires each cell's CSI (for example, CQIs), fed back from the user terminal using the PUCCH. The content of CSI fed back from the user terminal varies depending on the PUCCH reporting mode. In the event of the above first embodiment, as shown in FIGs. 7 to 10, content to combine the channel state information of multiple cells (WB CQIs, WB PMIs, SB CQIs or a WB RI) in one subframe is provided. For example, in the event of above FIG. 7B (extended mode 1-0), it is possible to acquire each CoMP cell's WB CQI by receiving the PUCCH of one subframe.

Based on each cell's CSI acquired in the CSI acquiring section 2045, the CSI updating section 2044 re-calculates and updates the CSI (for example, CQIs). When the first embodiment is applied, each cell's WB CQI, SB CQI and so on are combined and fed back within one subframe, so that the CSI updating section 2044 is able to update CSI based on the latest CSI of each cell.

The reporting mode determining section 2046 determines the reporting mode for selecting the channel state information which the user terminal feeds back using the PUCCH. The reporting mode determining section 2046 is able to determine the reporting mode based on the channel state information acquired in the CSI acquiring section 2045, the updated CSI values calculated in the CSI updating section 2044, and so on. In the event of the above first embodiment, the reporting mode is determined from extended mode 1-0, extended mode 1-1, extended mode 2-0 and extended mode 2-1. Obviously, the reporting mode is not limited to these. The reporting mode determined in the reporting mode determining section 2046 is reported to the user terminal via the transmitting/receiving sections 203 through higher layer signaling and so on.

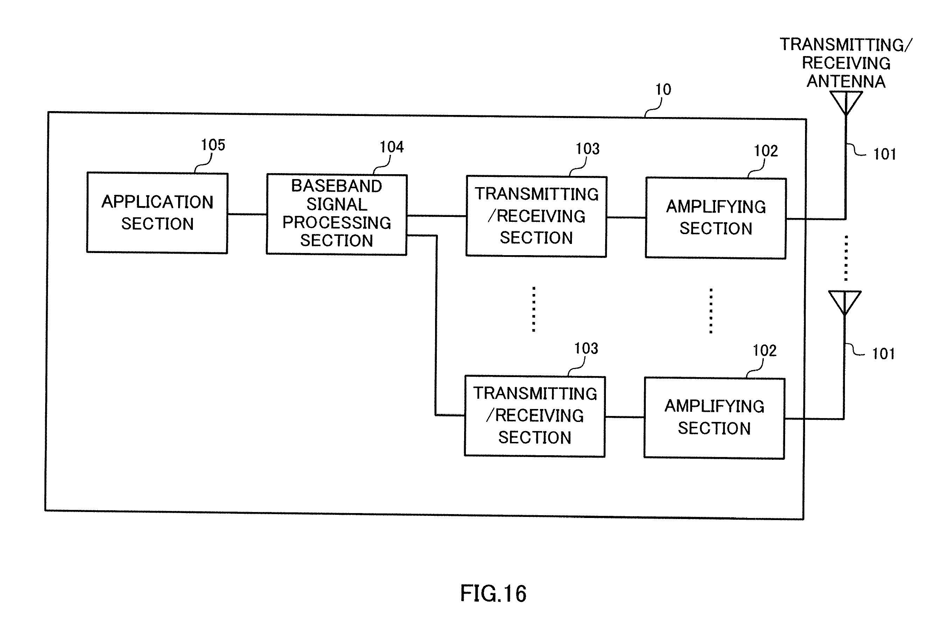

Next, an overall configuration of a user terminal according to the present embodiment will be described with reference to FIG. 16. An LTE terminal and an LTE-A terminal have the same hardware configurations in principle parts, and therefore will be described indiscriminately. A user terminal 10 has transmitting/receiving antennas 101, amplifying sections 102, transmitting/receiving sections (receiving sections) 103, a baseband signal processing section 104, and an application section 105.

As for downlink data, radio frequency signals that are received in the transmitting/receiving antennas 101 are amplified in the amplifying sections 102, and subjected to frequency conversion and converted into baseband signals in the transmitting/receiving sections 103. The baseband signals are subjected to receiving processes such as an FFT process, error correction decoding and retransmission control, in the baseband signal processing section 104. In this downlink data, downlink transmission data is transferred to the application section 105. The application section 105 performs processes related to higher layers above the physical layer and the MAC layer. Also, in the downlink data, broadcast information is also transferred to the application section 105.

Meanwhile, uplink transmission data is input from the application section 105 into the baseband signal processing section 104. The baseband signal processing section 104 performs a mapping process, a retransmission control (HARQ) transmission process, channel coding, a DFT process, and an IFFT process. Baseband signals that are output from the baseband signal processing section 104 are converted into a radio frequency band in the transmitting/receiving sections 103. After that, the amplifying sections 102 amplify the radio frequency signals having been subjected to frequency conversion, and transmit the results from the transmitting/receiving antennas 101. Note that the transmitting/receiving sections 103 constitute a transmitting means to transmit information about phase differences, information about connecting cells, selected PMIs and so on, to the radio base station apparatus eNBs of a plurality of cells, and a receiving means to receive downlink signals.

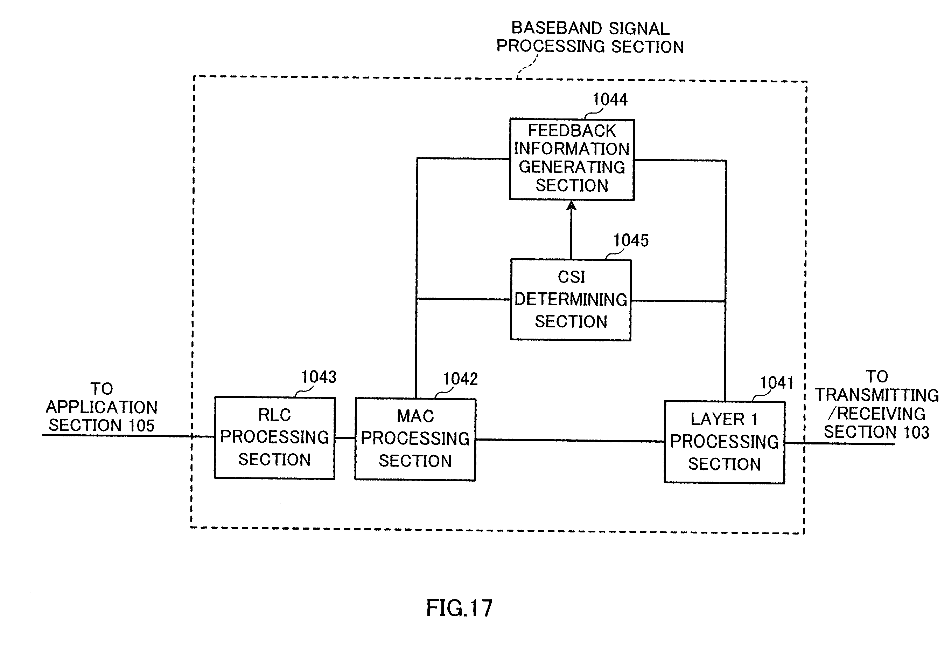

FIG. 17 is a block diagram showing a configuration of a baseband signal processing section in the user terminal shown in FIG. 16. The baseband signal processing section 104 is primarily formed with a layer 1 processing section 1041, a MAC processing section 1042, an RLC processing section 1043, a feedback information generating section 1044, and a CSI determining section 1045.

The layer 1 processing section 1041 mainly performs processes related to the physical layer. The layer 1 processing section 1041 performs processes for a signal that is received on the downlink, including, for example, channel decoding, a discrete Fourier transform (DFT), frequency demapping, an inverse fast Fourier transform (IFFT), data demodulation and so on. Also, the layer 1 processing section 1041 performs processes for a signal to transmit on the uplink, including channel coding, data modulation, frequency mapping, an inverse fast Fourier transform (IFFT) and so on.

The MAC processing section 1042 performs, for a signal that is received on the downlink, MAC layer retransmission control (HARQ), an analysis of downlink scheduling information (specifying the PDSCH transport format and specifying the PDSCH resource blocks) and so on. Also, the MAC processing section 1042 performs processes for a signal to transmit on the uplink, such as MAC retransmission control, an analysis of uplink scheduling information (specifying the PUSCH transport format and specifying the PUSCH resource blocks) and so on.

The RLC processing section 1043 performs, for a packet received on the downlink/a packet to transmit on the uplink, packet division, packet combining, RLC layer retransmission control, and so on.

The CSI determining section 1045 determines the channel state information of each of a plurality of cells (WB CQI, WB PMI, SB CQI, WB RI and so on). For example, the CSI determining section 1045 calculates WB CQIs and SB CQIs from the desired signals of the cells, interference signals, interference of cells apart from the CoMP set, thermal noise. Each cell's CSI, determined in the CSI determining section 1045, is output to the feedback information generating section 1044.

The feedback information generating section 1044 generates feedback information (CSI and so on). The CSI may include each cell's WB CQI, WB PMI, SB CQI, WB RI, phase difference information and so on. Also, the feedback information generating section 1044 generates feedback information based on the reporting mode determined in and reported from the reporting mode determining section 2046 of the radio base station apparatus.

Besides, the feedback information generating section 1044 also generates retransmission control signals (ACK/NACK), which show whether or not the user terminal has received the data signal adequately, as feedback information. These signals generated in the feedback information generating section 1044 are fed back to the radio base station apparatus using the PUCCH.

In the event of the above first embodiment, the feedback information generating section 1044 generates feedback information such that at least part of the channel state information of multiple cells is combined and transmitted in the same subframe.

Also, in the mode to report WB CQIs (extended mode 1-0), the feedback information generating section 1044 generates feedback information in which the WB CQIs of multiple cells are combined and arranged in a PUCCH in one subframe. Also, in the mode to report WB CQIs and WB PMIs (extended mode 1-1), the feedback information generating section 1044 generates feedback information in which the WB CQIs of multiple cells and/or the WB PMIs of multiple cells are combined and arranged in a PUCCH in one subframe. Also, in the mode to report at least one SB CQI that maximizes the SB CQI value and WB CQIs (extended modes 2-0 and 2-1), the feedback information generating section 1044 generates feedback information in which the WB CQIs of multiple cells or the SB CQIs of multiple cells are combined and arranged in a PUCCH in one subframe.

Also, the granularity (accuracy) of CSI (WB CQIs, SB CQIs and so on) that is fed back from the user terminal is controlled taking into account the types and combinations of information to be arranged in a PUCCH in one subframe, and so on. For example, when the CQIs of multiple cells are arranged in a PUCCH in one subframe, each cell's CQI is compressed by sub-sampling and allocated to PUCCH resources.

In the event of the second embodiment above, the feedback information generating section 1044 applies extended PUCCH formats 3a to 3c, depending on the information to feed back. For example, the feedback information generating section 1044 applies above extended PUCCH format 3a when feeding back the CSI of multiple cells without sending retransmission acknowledgement signals. Also, the feedback information generating section 1044 applies above extended PUCCH format 3b or 3c when feeding back the CSI and retransmission acknowledgement signals of multiple cells.

In a radio communication system having the above configuration, each cell's CSI (WB CQI, WB PMI, SB CQI, WB RI and so on) is calculated in the CSI determining section 1045 of the user terminal. Then, the determined CSI is output to the feedback information generating section 1044. The feedback information generating section 1044 generates feedback information such that at least part of the channel state information of multiple cells is combined and transmitted in the same subframe. At this time, the feedback information generating section 1044 selects the CSI to feed back, based on the reporting mode determined in and reported from the reporting mode determining section 2046 of the radio base station apparatus. Then, the feedback information generating section 1044 feeds back each cell's CSI to the radio base station apparatus.

The radio base station apparatus updates the CSI using the CSI of multiple cells fed back from the user terminal. Also, the reporting mode determining section 2046 of the radio base station apparatus determines the reporting mode based on the CSI that is fed back or the updated CSI values, and reports it to the user terminal. In this way, with the radio communication method according to the present embodiment, when CoMP transmission is applied, it is possible to feed back each cell's CSI to the radio base station apparatus quickly, so that it is possible to improve the accuracy of updated CQI values.

Now, although the present invention has been described in detail with reference to the above embodiments, it should be obvious to a person skilled in the art that the present invention is by no means limited to the embodiments described herein. The present invention can be implemented with various corrections and in various modifications, without departing from the spirit and scope of the present invention defined by the recitations of the claims. Consequently, the descriptions herein are provided only for the purpose of explaining examples, and should by no means be construed to limit the present invention in any way.

The disclosure of Japanese Patent Application No. 2012-067845, filed on March 23, 2012, including the specification, drawings and abstract, is incorporated herein by reference in its entirety.

## Claims

1. A radio communication system comprising a plurality of radio base station apparatuses and a user terminal that is configured to be able to perform coordinated multiple-point transmission/reception with the plurality of radio base station apparatuses, wherein:
the user terminal comprises:
a determining section configured to determine channel state information of each of multiple cells;
a generating section configured to generate feedback information such that at least part of the determined channel state information of the multiple cells is combined and transmitted in a same subframe; and
a transmission section configured to periodically feed back the generated feedback information to a radio base station apparatus, which is one of multiple coordinated points, using a physical uplink control channel; and
the radio base station apparatus comprises an updating section configured to update the channel state information using the channel state information that is fed back from the user terminal.

2. The radio communication system according to claim 1, wherein, in a mode to report a wideband channel quality indicator of an entire system band, the generating section generates feedback information in which wideband channel quality indicators of the multiple cells are combined and allocated to a physical uplink control channel in one subframe.

3. The radio communication system according to claim 1, wherein, in a mode to report a wideband channel quality indicator of an entire system band and a wideband PMI (precoding matrix indicator) of the entire system band, the generating section generates feedback information in which wideband channel quality indicators of the multiple cells and/or wideband PMIs of the multiple cells are combined and allocated to a physical uplink control channel in one subframe.

4. The radio communication system according to claim 1, wherein, in a mode to report a channel quality indicator of one subband having a largest channel quality indicator and selected from N subbands constituting a system band, and a wideband channel quality indicator of an entire system band, the generating section generates feedback information in which subband channel quality indicators of the multiple cells or wideband channel quality indicators of the multiple cells are combined and allocated to a physical uplink control channel in one subframe.

5. The radio communication system according to claim 2, wherein the generating section generates feedback information in which wideband channel quality indicators of part of the cells in the multiple cells are combined and allocated to the physical uplink control channel in one subframe.

6. The radio communication system according to claim 5, wherein the generating section generates the feedback information such that a wideband channel quality indicator of a specific cell in the multiple cells is fed back preferentially.

7. The radio communication system according to claim 2, wherein the generating section generates feedback information in which wideband channel quality indicators of the multiple cells having different granularities are combined and allocated to the physical uplink control channel in one subframe.

8. The radio communication system according to claim 1, wherein, after having performed a channel coding process of information combining the channel state information of the multiple cells, the generating section performs a DFT (Discrete Fourier Transform) process.

9. The radio communication system according to claim 1, wherein, after having performed a channel coding process of information combining the channel state information of the multiple cells and retransmission acknowledgement signals separately, and multiplexed the information combining the channel state information of the multiple cells having been subjected to the channel coding and a code sequence of the retransmission acknowledgement signals, the generating section performs a DFT (Discrete Fourier Transform) process.

10. The radio communication system according to claim 1, wherein, after having multiplexed information combining channel state information of the multiple cells and retransmission acknowledgement signals, and performed a channel coding process, the generating section performs a DFT (Discrete Fourier Transform) process.

11. A user terminal that is configured to be able to perform coordinated multiple-point transmission/reception with a plurality of radio base station apparatuses, the user terminal comprising:
an acquiring section configured to acquire channel state information of each of multiple cells;
a generating section configured to generate feedback information such that at least part of the acquired channel state information of the multiple cells is combined and transmitted in a same subframe; and
a transmission section configured to periodically feed back the generated feedback information to a radio base station apparatus, which is one of multiple coordinated points, using a physical uplink control channel.

12. A radio base station apparatus that coordinates with another radio base station apparatus and performs coordinated multiple-point transmission/reception with a user terminal, the radio base station apparatus comprising:
a determining section configured to determine a reporting mode for selecting channel state information which the user terminal feeds back using a physical uplink control channel;
a transmission section configured to notify the user terminal of the determined reporting mode;
a receiving section configured to receive feedback information, which the user terminal feeds back based on the reporting mode, and in which the channel state information of multiple cells is combined in one subframe, via the physical uplink control channel; and
an updating section configured to update the channel state information using the received channel state information of the multiple cells.

13. A radio communication method for a plurality of radio base station apparatuses and a user terminal that is configured to be able to perform coordinated multiple-point transmission/reception with the plurality of radio base station apparatuses, the radio communication method comprising the steps of:
at the user terminal:
acquiring channel state information of each of multiple cells;
generating feedback information such that at least part of the acquired channel state information of the multiple cells is combined and transmitted in a same subframe; and
periodically feeding back the generated feedback information to a radio base station apparatus, which is one of multiple coordinated points, using a physical uplink control channel; and
at the radio base station apparatus:
updating the channel state information using the channel state information that is fed back from the user terminal.
